# EUROPÄISCHE PATENTSCHRIFT

(11) **EP 3 909 891 B1**
(45) Veröffentlichungstag und Bekanntmachung des Hinweises auf die Patenterteilung: **03.07.2024**
(21) Anmeldenummer: 20173961.2
(22) Anmeldetag: 11.05.2020
(51) Int. Cl.: B65G 47/51, B65G 59/02, B65G 61/00

(54) **VORRICHTUNG UND VERFAHREN ZUM ZWISCHENSPEICHERN VON STÜCKGUTSTAPELN IN EINER ANLAGE ZUM HERSTELLEN VON LEBENSMITTELPRODUKTEN**
DEVICE AND METHOD FOR TEMPORARILY STORING STACKS OF ARTICLES IN A SYSTEM FOR PRODUCING FOOD PRODUCTS
DISPOSITIF ET PROCÉDÉ DE STOCKAGE INTERMÉDIAIRE D'EMPILEMENTS DE MARCHANDISES DE DÉTAIL DANS UNE INSTALLATION DE FABRICATION DE PRODUITS ALIMENTAIRES

(43) Veröffentlichungstag der Anmeldung: 17.11.2021
(73) Patentinhaber: Bühler GmbH, 51580 Reichshof (DE)
(72) Erfinder: Klein, Achim, 58638 Iserlohn (DE); Hauschulz, Kay, 53757 Sankt Augustin (DE); Knapp, Mark, Welburn, YO17ND York (GB); Chapman, Stephen, Pond Garth, YO17ND York (GB); Knight, Sean, Bryansford, Newcastle, Co Down BT33 0QY (GB)
(74) Vertreter: Hepp Wenger Ryffel AG

(56) Entgegenhaltungen:
- WO-A1-2018/202801
- JP-A- S6 056 728
- US-A- 3 601 266
- US-A- 4 509 891
- US-A- 6 146 087
- US-A1- 2011 041 706
- US-A1- 2020 002 107

## Beschreibung

Die vorliegende Erfindung betrifft eine Vorrichtung zum Zwischenspeichern von Stückgutstapeln für eine Anlage zum Herstellen von Lebensmittelprodukten, insbesondere Schokoladenprodukten, ein Verfahren zum Entkoppeln eines ankommenden Flusses von Stückgutstapeln von einem nachgeordneten Abschnitt einer Anlage zum Herstellen von Lebensmittelprodukten, insbesondere Schokoladenprodukten, sowie eine Anlage mit einer erfindungsgemässen Vorrichtung.

Vorrichtungen der gattungsgemässen Art kommen beispielsweise zwischen einer Produktionseinrichtung und einer Verpackungseinrichtung zum Einsatz und sind unter anderem auch unter den Begriffen Pufferspeicher, Puffereinrichtung oder Produktfluss-Regulator bekannt. Um Produktstau und damit verbundene Betriebsstörungen zu vermeiden, werden Verpackungseinrichtungen üblicherweise so ausgelegt, dass ihre Verpackungsleistung höher ist als der Ausstoss der Produktionseinrichtung. Beim Auftreten einer beabsichtigten oder unbeabsichtigten Betriebsunterbrechung der Verpackungseinrichtung müssen die im Fertigungsprozess befindlichen Produkte in der Regel noch aus der Produktionseinrichtung ausgetragen werden, weshalb ein Anhalten oder Abschalten der Produktionseinrichtung häufig nur mit einer erheblichen Verzögerung möglich ist. Da die aus der Produktionseinrichtung ausgetragenen Produkte jedoch nicht durch die Verpackungseinrichtung abgenommen werden, kommt es in der Folge zu einem Produktstau und im Fall von Nahrungsmitteln häufig auch zu Ausschuss. Aus diesem Grund werden bei solchen Produktflüssen Massnahmen getroffen, um den von einer Produktionseinrichtung bereitgestellten Produktfluss von einem nachgeordneten Abschnitt der Anlage zu entkoppeln. Aus dem Stand der Technik sind Zwischenspeicher mit einer Vielzahl von vertikal angeordneten Zwischenspeicherebenen bekannt, in denen die zu speichernden Produkte mittels eines Elevators von der Ebene, auf der sie ankommen, zu der Ebene, auf der sie zwischengespeichert werden, bewegt werden bzw. von den Zwischenspeicherebenen abgeholt und auf das Niveau der Weiterleitung gebracht werden.

Derlei Zwischenspeicher weisen jedoch den Nachteil auf, dass sie den Produktionsprozess erheblich verkomplizieren, einen hohen Einsatz von finanziellen Mitteln erfordern und zudem viel Platz benötigen. WO 2018/202801 A1 offenbart eine Vorrichtung gemäß dem Oberbegriff des Anspruchs 1.

Ausgehend von dem genannten Stand der Technik liegt der vorliegenden Erfindung die Aufgabe zugrunde, solche und weitere Nachteile des Standes der Technik zu beheben und insbesondere eine Vorrichtung und ein Verfahren anzugeben, wodurch das Zwischenspeichern von Stückgutstapeln kosteneffizienter, platzsparender und unter Vermeidung von hohen Ausschusszahlen verwirklicht wird.

Die Aufgabe wird insbesondere durch eine Vorrichtung, eine Anlage umfassend eine erfindungsgemässe Vorrichtung und ein Verfahren gemäss den unabhängigen Ansprüchen gelöst. Vorteilhafte Ausgestaltungen und Weiterbildungen sind Gegenstand der abhängigen Ansprüche.

Insbesondere wird die Aufgabe durch eine Vorrichtung gemäß Anspruch 1, zum Zwischenspeichern von Stückgutstapeln, die getaktet auf einem in der Vorrichtung integrierten Übergabeplatz einer Anlage zum Herstellen von Lebensmittelprodukten, insbesondere Schokoladenprodukten, bereitgestellt werden, gelöst. Erfindungsgemäss weist die Vorrichtung einen Pufferabschnitt umfassend einen oder mehrere Speicherplätze und einen Abgabeplatz auf. Die Vorrichtung weist ferner eine Transporteinrichtung zum Bewegen der Stückgutstapel und einen Manipulator auf. Der Manipulator kann den Übergabeplatz, den Abgabeplatz sowie die zwischen dem Übergabe- und dem Abgabeplatz angeordneten Speicherplätze anfahren. Durch den Manipulator können die Stückgüter auf den Abgabeplatz umgesetzt werden, wobei der Manipulator jeweils wenigstens ein Stückgut eines Stückgutstapels, bevorzugt mehrere Stückgüter eines Stückgutstapels auf einmal, auf den Abgabeplatz umsetzen kann. Die auf den Abgabeplatz umgesetzten, stapelförmig angeordneten Stückgüter sind auf dem Abgabeplatz vereinzelbar und einem nachgeordneten Abschnitt der Anlage zuführbar. Durch die sukzessive Belegung der Speicherplätze mit Stückgutstapeln ist der am Übergabeplatz bereitgestellte Fluss von Stückgütern von einem nachgeordneten Abschnitt der Anlage entkoppelbar.

Durch die erfindungsgemässe Vorrichtung ist ein flexibler Zwischenspeicher mit einem geringen Platzbedarf realisierbar, in dem die Stückgutstapel temporär gespeichert werden können, falls ein nachgeordneter Abschnitt der Anlage kurzfristig gewartet werden muss oder aus anderen Gründen keine Stückgüter abnehmen kann.

Selbstverständlich wäre es auch denkbar, dass die Stückgüter die erfindungsgemässe Vorrichtung statt in Form von Stückgutstapeln in vereinzelter Form durchlaufen, wobei sich dadurch jedoch nicht alle der beschriebenen Vorteile ergäben. Insbesondere hätte ein mit vereinzelten Stückgütern einhergehender höherer Durchsatz zur Folge, dass der durch die Belegung der vorgesehenen Speicherplätze erzielbare Puffereffekt, d.h. die zeitliche Verzögerung des ankommenden Flusses von Stückgütern von einem der Vorrichtung nachgeordneten Abschnitt der Anlage, abnimmt.

Im Rahmen der vorliegenden Erfindung beziehen sich die Begriffe "Platz" bzw. "Plätze" auf die jeweiligen Positionen entlang der durch die Transporteinrichtung gebildeten Förderstrecke, welche die Stückgüter beim Durchlaufen der erfindungsgemässen Vorrichtung erreichen. Jede dieser Positionen weist eine Fläche (A) auf, die mindestens der Länge (l) und mindestens der Breite (b) eines die erfindungsgemässe Vorrichtung durchlaufenden Stückguts, insbesondere im Wesentlichen genau der Länge (l) und Breite (b) eines die erfindungsgemässe Vorrichtung durchlaufenden Stückguts, entspricht. Insbesondere beziehen sich die Begriffe "Platz" bzw. "Plätze" auf die Positionen entlang der Förderstrecke, auf die die Stückgüter durch die Transporteinrichtung im Maschinentakt bewegt werden und auf denen die Stückgüter kurzzeitig zum Stillstand kommen. Die Transporteinrichtung der erfindungsgemässen Vorrichtung umfasst demnach eine Transportstrecke, welche lang genug ist, um eine für eine entsprechende Anwendung benötigte bzw. gewünschte Anzahl an Positionen für Stückgüter bereitzustellen.

In einer bevorzugten Ausführungsform sind die auf dem Übergabeplatz befindenden Stückgutstapel aktiv behandelbar.

Durch die Integration des vorgeordneten Abschnitts der Anlage in den erfindungsgemässen Zwischenspeicher lässt sich eine besonders kompakt und platzsparend gebaute Vorrichtung mit Pufferfunktion bereitstellen.

In einer besonderen Ausführungsform der erfindungsgemässen Vorrichtung findet im Pufferabschnitt, also im Bereich des Abgabeplatzes und der Speicherplätze, keine aktive Behandlung der sich auf diesen Plätzen befindenden Stückgutstapel statt.

Unter einer aktiven Behandlung wird im Rahmen der vorliegenden Erfindung ein Vorgang oder eine Kombination von Vorgängen verstanden, der einen Arbeitsschritt in der Produktion der Nahrungsmittel darstellt. Beispielsweise finden aktive Behandlungen in Formenwechselabschnitten, Anwärmabschnitten, Kühlabschnitten oder Ausformungsabschnitten einer Anlage zur Herstellung von Lebensmitteln statt. Insbesondere wird unter einer aktiven Behandlung im Rahmen der vorliegenden Erfindung eine Kühlung der Stückgutstapel verstanden, also eine Verringerung der Temperatur der Stückgüter. Für den Fall, dass es sich bei den Stückgütern um Produktträger handelt, bewirkt das Kühlen der Produktträger auch ein Abkühlen der in den Produktträgern angeordneten Produkte. Beispielhaft sei hier das Beblasen der Stückgutstapel mit kalter Luft zum Erstarren von flüssiger Schokolade, welche in einem vorgeordneten Abschnitt der Anlage in die Produktträger gefüllt wurde, angeführt. Der Transport der Stückgutstapel in Transportrichtung durch die Transporteinrichtung sowie das Umsetzung von Stückgütern durch den Manipulator sind im Rahmen der vorliegenden Erfindung nicht als aktive Behandlung zu verstehen.

In einer bevorzugten Ausführungsform umfasst die erfindungsgemässe Vorrichtung ferner eine Einrichtung zum Aufstapeln der Stückgüter, welche aus einem der Vorrichtung vorgeordneten Abschnitt der Anlage in vereinzelter Form an der Vorrichtung ankommen. Die Einrichtung ist zur Übergabe der durch sie gebildeten Stückgutstapel an den von ihr aus in Transportrichtung zuerst angeordneten Behandlungsplatz ausgebildet.

Im Rahmen der vorliegenden Erfindung wird unter einem Stückgutstapel eine Anordnung von zumindest zwei Stückgütern in Lagen übereinander verstanden. Solche Einrichtungen zum Auf- und Entstapeln von stapelbaren Stückgütern, wie beispielsweise Produktträgern oder Formen, sind dem Fachmann beispielsweise aus der WO 2017/129720 A1 bekannt.

Durch die stapelförmige Gruppierung der in vereinzelter Form an der erfindungsgemässen Vorrichtung ankommenden Stückgüter kann eine Verlangsamung des Anlagentaktes im Bereich der erfindungsgemässen Vorrichtung erreicht werden. Anders ausgedrückt wird durch die stapelförmige Gruppierung eine Vorpufferung erzielt, durch welche die Zeitspanne, während welcher der Zwischenspeicher gefüllt werden kann, verlängert und die Kapazität des erfindungsgemässen Zwischenspeichers vergrössert werden kann.

Bevorzugt handelt es sich bei dem Manipulator um ein Portalsystem. Das Portalsystem ist dabei zur Kontaktierung, zur Abnahme, zum Umsetzen, sowie zur Ablage der Stückgüter, insbesondere Produktträger, auf den Abgabeplatz ausgebildet. Die Kontakteinrichtung des Portalsystems ist in der Höhe und andererseits in und gegen die Transportrichtung der Stückgüter verfahrbar, so dass der Übergabeplatz, die Speicherplätze sowie der Abgabeplatz durch das Portalsystem anfahrbar sind.

Bei Portalsystemen handelt es sich um symmetrisch aufgebaute kartesische Robotersysteme zur mehrdimensionalen Bewegung von Transport- und Arbeitsmitteln in einem durch mechanische Linearbewegungsvorrichtungen vorgebbaren Arbeitsraum. In der Praxis sind Portalsysteme vielfältig im Einsatz, beispielsweise zur Durchführung von Bestückungs- oder Montageaufgaben. Portalsysteme der gattungsgemässen Art umfassen ein zur ortsfesten Anbringung bestimmtes Portal mit einer über die Portallänge in x-Richtung verfahrbaren Grundeinheit, sowie der Grundeinheit zugeordnete, vertikal in z-Richtung und horizontal in y-Richtung verfahrbare Anordnungen, beispielsweise Transport- und/oder Greifeinrichtungen. Ein solches Portalsystem ist beispielsweise aus der EP 0 255 622 A1 bekannt.

Durch die Ausbildung des Manipulators als Portalsystem wird eine besonders stabile Konstruktion und eine hohe Umsetzleistung bei gleichzeitig hoher Positioniergenauigkeit der Stückgüter erreicht.

In einer bevorzugten Ausführungsform der erfindungsgemässen Vorrichtung ist die Transporteinrichtung als Inline-Transporteinrichtung einer Anlage ausgebildet, welche zwischen einem vorgeordneten Abschnitt und einem in Transportrichtung nachgeordneten Abschnitt der Anlage zwischenschaltbar ist.

Der Begriff "Inline-Anlage" hat sich im Bereich der industriellen Nahrungsmittelproduktion auch in der deutschen Fachsprache fest etabliert. Eine Inline-Transporteinrichtung stellt einen Teil der Förderstrecke der Anlage dar, welche die Stückgutstapel in Transportrichtung durch den Behandlungsabschnitt bewegt. Bei einem Betriebsunterbruch in einem nachgeordneten Abschnitt der Anlage ist die für die Stückgutstapel zur Verfügung stehende Förderstrecke durch die Transporteinrichtung verlängerbar, indem die Stückgutstapel in Transportrichtung in den Pufferbereich weiterbewegt werden.

Somit ist kein Bypass oder eine sonstige Umleitung der Stückgüter erforderlich, wodurch sehr schnell auf nachgeordnete Betriebsunterbrechungen reagiert werden kann. Insbesondere muss dadurch nicht, wie im Stand der Technik üblich, ein separater Anlagenteil aktiviert werden.

Unter einer Betriebsunterbrechung wird im Rahmen der vorliegenden Erfindung jeder Zustand eines Anlagenabschnitts verstanden, in dem der Durchsatz des entsprechenden Anlagenabschnitts weniger als 100% des im Normalbetrieb dieses Anlagenabschnitts erzielten Durchsatzes beträgt. Beispielsweise kann es sich bei einer Betriebsunterbrechung um einen Unterbruch in der Verpackung handeln.

Zur Bewegung der Stückgutstapel in Transportrichtung können beispielsweise Hubbalkenförderer eingesetzt werden, welche gattungsgemäss mehrere in Transportrichtung hintereinander angeordnete und miteinander gekoppelte Hubbalken desselben Förderertyps aufweisen, welche über ihren Fahrantrieb taktweise gemeinsam vor- und zurückbewegt werden. Die einzelnen Förderer sind durch jeweils eine Verbindungsstange miteinander gekuppelt. Dabei sind der oder die Hubbalken mittels ihrer Hubvorrichtungen heb- und senkbar, so dass die auf seitlichen Auflagerflächen aufliegenden Stückgüter bzw. Stückgutstapel durch eine koordinierte Hub-/Schubbewegung taktweise entlang der Transportrichtung bewegt, d.h. auf den in Transportrichtung jeweils nächstgelegenen Behandlungs-, Übergabe- bzw. Speicherplatz transportiert werden. Ein solcher Hubbalkenförderer ist aus dem Stand der Technik beispielsweise durch die DE 601 10 678 T2 bekannt. Selbstverständlich ist es erfindungsgemäss auch denkbar, dass die Transporteinrichtung beispielsweise zwei Stückgutstapel paarweise um jeweils zwei Positionen in Transportrichtung bewegt.

Gemäß der Erfindung ist die Transporteinrichtung als Hubbalken-Fördersystem ausgebildet. Das Hubbalken-Fördersystem umfasst zwei parallel zueinander angeordnete Schubleisten mit Mitnehmern, einen elektrischen Linearantrieb zur Bewegung der Schubleisten in einer Transportrichtung (T, T1, T2) und mindestens einen Pneumatikantrieb für eine Vertikalbewegung der Schubleisten.

Erfindungsgemäß umfasst die Vorrichtung ferner eine Verkleidung. Durch die Verkleidung wird ein bezüglich Luftfeuchtigkeit und/oder Temperatur kontrollierter Raum gebildet. Alternativ oder zusätzlich dazu schützt der durch die Verkleidung umschlossene Raum die darin enthaltenen Stückgüter auch vor anderen Umwelteinflüssen. In dem Raum ist der Pufferabschnitt und optional der Behandlungsabschnitt angeordnet.

Durch die Möglichkeit des Einstellens von kontrollierten Temperatur- und/oder Luftfeuchtigkeitsbedingungen und/oder dem Schutz vor anderen schädlichen Umwelteinflüssen kann die Zeit, in der die Stückgutstapel im Zwischenspeicher verbleiben können, erhöht werden und Ausschuss reduziert bzw. vermieden werden.

In einer bevorzugten Ausführungsform weist die erfindungsgemässe Vorrichtung mindestens eine Steuereinheit auf, die Schnittstellen zum Datentransfer mit Steuereinheiten vor- und/oder nachgeordneter Abschnitte der Anlage umfasst. Dadurch ist die Steuereinheit der erfindungsgemässen Vorrichtung mit den Steuereinheiten der vor- und/oder nachgeordneten Abschnitte der Anlage in einer Ring- oder Reihenschaltung verbindbar oder verbunden.

Durch eine solche Ring- oder Reihenschaltung wird ermöglicht, dass die einzelnen Abschnitte der Anlage, insbesondere die erfindungsgemässe Vorrichtung und ein nachgeordneter Abschnitt der Anlage, untereinander Daten austauschen können und die einzelnen Abschnitte der Anlage, insbesondere die erfindungsgemässe Vorrichtung, jeweils autark steuerbar sind. Die erfindungsgemässe Vorrichtung ermöglicht somit eine vollautomatische Kompensation von kurzzeitigen

Betriebsunterbrechungen in einem oder mehreren der nachgeordneten Abschnitte der Anlage.

Bevorzugt ist die Steuereinheit mit zumindest einem, an einem der vor- und/oder nachgeordneten Abschnitte der Anlage angeordneten, Sensor verbunden, welcher den Betriebszustand des jeweiligen Abschnitts erfasst. Weiter ist in dieser bevorzugten Ausführungsform der erfindungsgemässen Vorrichtung die Steuereinheit zur Steuerung des Manipulators sowie der Transporteinrichtung ausgebildet, so dass die Aktivität des Manipulators sowie der Transporteinrichtung in Abhängigkeit des jeweiligen Betriebszustandes des vor- und/oder nachgeordneten Abschnitts über die Steuereinheit steuerbar ist.

Dadurch wird ermöglicht, dass die erfindungsgemässe Vorrichtung auf die Leistung eines vor- und/oder nachgeordneten Abschnitts der Anlage reagieren kann, wodurch die Effizienz und die Auslastung des Zwischenspeichers erhöht werden kann. Beispielsweise kann somit bereits bei einer absehbaren Betriebsunterbrechung in einem nachgeordneten Abschnitt der Anlage, beispielsweise beim Neubestücken der Verpackungseinrichtung mit Verpackungsmaterial, automatisch die Aktivität des Manipulators gestoppt und die getaktet bereitgestellten Stückgutstapel stattdessen sukzessive auf die in Transportrichtung vorhandenen Speicherplätze bewegt werden, so dass die Produktion auch während eines Stopps im nachgeordneten Abschnitt der Anlage weiterlaufen kann.

Die Aufgabe wird weiterhin durch eine Anlage gemäß Anspruch 8, zum Herstellen von Lebensmittelprodukten, insbesondere Schokoladenprodukten, umfassend eine erfindungsgemässe Vorrichtung gelöst.

Eine solche Anlage weist den Vorteil auf, dass im Falle eines Ausfalles und/oder einer Betriebsunterbrechung in einem der erfindungsgemässen Vorrichtung nachgeordneten Abschnitt der Anlage nicht, wie im Stand der Technik üblich, ein gesonderter Anlagenabschnitt aktiviert oder in die Anlage integriert, also beispielsweise herangeschoben, werden muss. Dadurch kann sehr schnell auf solche Ausfälle und/oder Betriebsunterbrechungen reagiert werden und die mit dem Ausfall und/oder der Betriebsunterbrechung zusammenhängende Varianz im Durchsatz des entsprechenden Anlagenabschnitts vollautomatisch kompensiert werden.

Die Aufgabe wird weiterhin durch ein Verfahren gemäß Anspruch 9 zum Zwischenspeichern von Stückgutstapeln in einer Anlage zum Herstellen von Lebensmittelprodukten, insbesondere Schokoladenprodukten, gelöst. Gemäss dem erfindungsgemässen Verfahren werden die Stückgutstapel getaktet auf einem in der Vorrichtung integrierten oder an die Vorrichtung angrenzenden Übergabeplatz der Anlage bereitgestellt. Optional durchlaufen die Stückgutstapel zuvor in Transportrichtung einen oder mehrere Behandlungsplätze bis zu dem Übergabeplatz. Sofern die Stückgüter von einem nachgeordneten Abschnitt der Anlage abgenommen werden können, setzt ein Manipulator am Übergabeplatz oder alternativ von einem der Speicherplätze jeweils wenigstens ein Stückgut eines Stückgutstapels, bevorzugt mehrere Stückgüter eines Stückgutstapels auf einmal, auf den Abgabeplatz um. Auf dem Abgabeplatz werden die Stückgüter vereinzelt und einem nachgeordneten Abschnitt der Anlage zugeführt.

Ein solches Verfahren ermöglicht eine besonders effiziente Entkoppelung eines ankommenden Flusses von gestapelten Stückgütern von einem nachgeordneten Abschnitt der Anlage. Insbesondere ist das erfindungsgemässe Verfahren zur Verwendung mit einer erfindungsgemässen Vorrichtung vorgesehen.

Nach einer besonderen Ausführungsform des Verfahrens handelt es sich bei den Stückgütern um Produktträger. Unter Produktträgern sind im Rahmen der vorliegenden Erfindung insbesondere auch Formen mit Alveolen zu verstehen, wie sie für die Herstellung von Süsswarenprodukten bekannt sind.

Die in der Anlage hergestellten Nahrungsmittel sind in den Produktträgern behandelbar und/oder transportierbar.

In einer vorteilhaften Ausführungsform des erfindungsgemässen Verfahrens werden bei einem Betriebsunterbruch in einem dem Zwischenspeicher nachgeordneten Abschnitt der Anlage die am Übergabeplatz eintreffenden Stückgutstapel durch die Transporteinrichtung auf den vom Übergabeplatz in Transportrichtung nächstgelegenen Speicherplatz bewegt. Falls sich bereits Stückgutstapel im Zwischenspeicher befindenden, werden diese Stapel von ihrem jeweiligen Speicherplatz auf den in Transportrichtung nächstgelegenen Speicherplatz weiterbewegt. Bei Wiederaufnahme des Betriebs durch den dem Zwischenspeicher nachgeordneten Abschnitt der Anlage werden die auf den Speicherplätzen zwischengespeicherten Stückgutstapel durch den Manipulator auf den Abgabeplatz umgesetzt.

Bevorzugt werden die auf den Speicherplätzen zwischengespeicherten Stückgutstapel bei Wiederaufnahme des Betriebs in dem nachgeordneten Abschnitt der Anlage durch den Manipulator nach dem first in-first out-Prinzip auf den Abgabeplatz umgesetzt.

Durch das first in-first out Prinzip wird erreicht, dass die Reihenfolge der bereitgestellten Stückgüter bei der Belegung der Speicherplätze des Zwischenspeichers sowie bei der Abgabe an den nachgeordneten Abschnitt der Anlage zumindest teilweise beibehalten wird, was insbesondere bei der Produktion von Nahrungsmitteln Vorteile in der Minimierung von Ausschuss bringt.

Bevorzugt beträgt die Flussrate von an den nachgeordneten Abschnitt der Anlage abgegebenen Stückgütern zwischen 0 und 120% bezogen auf die je Maschinentakt der Transporteinrichtung am Übergabeplatz ankommende Stückgüterzahl.

Werden die Stückgüter durch den Manipulator schneller umgesetzt als diese durch den vorgeordneten Abschnitt der Anlage bereitgestellt werden, können die in der erfindungsgemässen Vorrichtung zwischengespeicherten Stückgutstapel bei Wiederaufnahme des Betriebs in einem nachgeordneten Abschnitt der Anlage wieder abgebaut und die vormals belegten Speicherplätze wieder freigegeben werden, womit die Anlage erneut in einen normalen Betriebszustand überführt werden kann. In diesem normalen Betriebszustand der Anlage erfolgt das Umsetzen der Stückgüter vom Übergabeplatz direkt auf den Abgabeplatz durch den Manipulator. Je schneller die Stückgutstapel umgesetzt und entstapelt werden können, desto schneller können die Speicherplätze geleert werden.

Nach einer bevorzugten Ausführungsform des erfindungsgemässen Verfahrens ist eine Steuereinheit und zumindest ein mit der Steuereinheit verbundener und an einem der nachgeordneten Abschnitte der Anlage angeordneter Sensor vorgesehen. Der Sensor bestimmt dabei den Betriebszustand des nachgeordneten Abschnitts der Anlage. Die Steuereinheit umfasst dabei Schnittstellen zum Datentransfer mit Steuereinheiten vor- und/oder nachgeordneter Abschnitte der Anlage. Ferner ist die Steuereinheit des erfindungsgemässen Zwischenspeichers mit den Steuereinheiten der vor- und/oder nachgeordneten Abschnitte der Anlage in einer Ring- oder Reihenschaltung verbunden, so dass die Aktivität des Manipulators sowie der Transporteinrichtung in Abhängigkeit des Betriebszustandes des nachgeordneten Abschnitts über die Steuereinheit gesteuert und/oder geregelt wird.

Diese Ausführungsform des erfindungsgemässen Verfahrens besitzt den Vorteil, dass der Zwischenspeicher automatisierbar auf den Durchsatz oder den Betriebszustand eines nachgeordneten Abschnitts der Anlage reagieren kann, wodurch die Effizienz und die Auslastung des Zwischenspeichers steigerbar ist. Beispielsweise kann somit bereits bei einer absehbaren Betriebsunterbrechung in einem nachgeordneten Abschnitt der Anlage automatisch die Aktivität des Manipulators gestoppt und die am Übergabeplatz bereitgestellten Stückgutstapel sukzessive in Transportrichtung auf die vorhandenen Speicherplätze bewegt werden, so dass die Produktion auch während eines Stopps im nachgeordneten Abschnitt der Anlage weiterlaufen kann.

Wird ein Anlagenstopp beim Füllen des Zwischenspeichers soweit hinausgezögert, dass alle verfügbaren Speicherplätzte mit Stückgutstapeln belegt sind und die jeweiligen Stückgutstapel im Zwischenspeicher somit beim erneuten Anfahren der Produktion nicht mehr um eine Position in Transportrichtung weiterbewegt werden können, muss vor der Wiederaufnahme der Produktion durch den vorgeordneten Abschnitt der Anlage der vorderste Stapel im Zwischenspeicher zunächst abgearbeitet werden.

Dazu ist erfindungsgemäss bevorzugt ferner eine Einrichtung zur automatisierten Erfassung des Belegungszustandes der Speicherplätze vorgesehen. In dieser Ausführungsform des erfindungsgemässen Verfahrens wird bei einer vollständigen Belegung aller im Zwischenspeicher vorhandenen Speicherplätze die Produktion in wenigstens einem der vorgeordneten Abschnitte der Anlage angehalten. Vor der Wiederaufnahme der Produktion wird zumindest der dem Abgabeplatz direkt vorhergehende Speicherplatz durch den Manipulator geleert.

Dadurch wird erreicht, dass der Zwischenspeicher nicht über seine Kapazität befüllt wird, wodurch auch die bereits im Zwischenspeicher zwischengespeicherten Stückgutstapel, insbesondere die in den Produktträgern angeordneten Lebensmittelprodukte, beschädigt werden könnten. Andererseits wird durch das Leeren des dem Abgabeplatz direkt vorausgehenden Speicherplatzes verhindert, dass bei zwei kurz hintereinander folgenden Ausfällen oder Betriebsunterbrechungen die Kapazität des Zwischenspeichers bereits erschöpft ist und die Produktion in einem der vorgeordneten Abschnitte der Anlage unterbrochen werden muss.

Im Folgenden wird die Erfindung anhand von Figuren exemplarisch dargestellt, in denen ähnlichen oder identischen Elementen die gleichen Bezugszeichen zugeordnet sind. Hierbei zeigen:
- Figur 1:: Schematische Darstellung einer Ausführungsform der erfindungsgemässen Vorrichtung;
- Figur 2:: Flussdiagramm einer Ausführungsform des erfindungsgemässen Verfahrens;
- Figur 3:: Schematische Darstellung einer Ausführungsform des erfindungsgemässen Verfahrens;
- Figur 4:: Schematische Darstellung einer weiteren Ausführungsform des erfindungsgemässen Verfahrens.

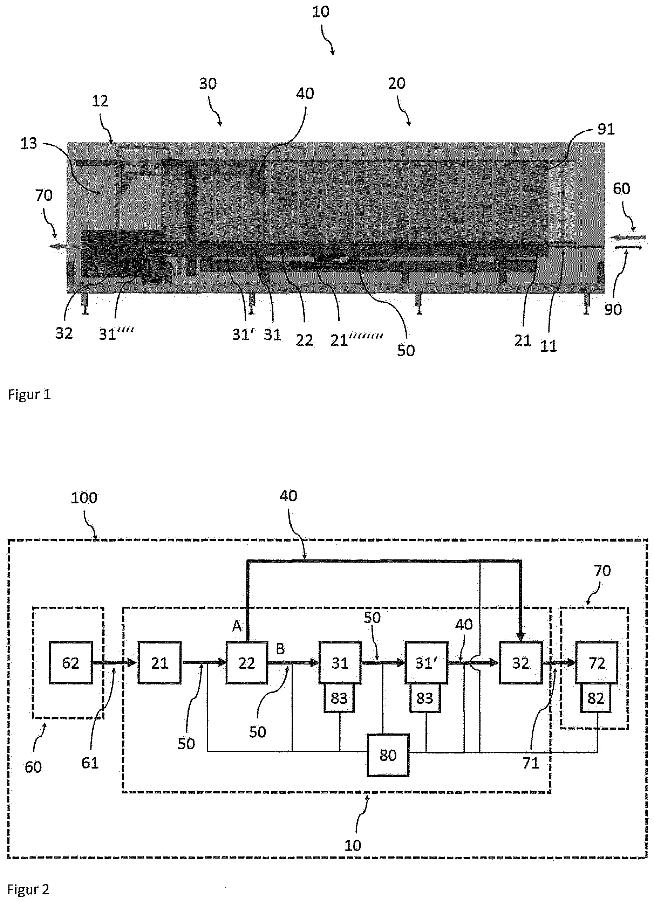

In Figur 1 ist eine schematische Seitenansicht einer erfindungsgemässen Vorrichtung gezeigt. Die Vorrichtung (10) umfasst einen Behandlungsabschnitt (20) mit mehreren Behandlungsplätzen (21 bis 21ʺʺʺʺ) und einem Übergabeplatz (22), sowie einen Pufferabschnitt (30) mit Speicherplätzen (31 bis 31ʺʺ) und Abgabeplatz (32). Ferner weist die Vorrichtung (10) eine Transporteinrichtung (50) und einen Manipulator (40) auf. Einlaufseitig ist eine Einrichtung (11) zum Aufstapeln der von dem vorgeordneten Abschnitt (60) der Anlage (100) bereitgestellten vereinzelten Stückgüter (90) vorgesehen (Aufstapler durch nach oben zeigenden Pfeil angedeutet). Die Vorrichtung (10) besitzt eine Verkleidung (12), die einen bezüglich Luftfeuchtigkeit und/oder Temperatur kontrollierten Raum (13) umschliesst und/oder vor anderen Umwelteinflüssen geschützten Raum (13) umschliesst. Beispielsweise ist die Verkleidung (12) für die im Wesentlichen gesamte Vorrichtung (10) vorgesehen. Der Behandlungsabschnitt (20) und der Pufferabschnitt (30) weisen eine gemeinsame Transporteinrichtung (50) auf. Dabei durchlaufen die Stückgutstapel (91) die einzelnen Behandlungsplätze (21) bis zum Übergabeplatz (22) im Arbeitstakt der erfindungsgemässen Vorrichtung (10). Dies ist in Figur 1 schematisch durch Pfeile dargestellt. Zum Entkoppeln des Produktionsflusses von dem nachgeordneten Abschnitt (70) der Anlage (100) werden die Stückgutstapel (91), beispielsweise aufgestapelte Produktträger (92), vom Übergabeplatz (22) zunächst zum ersten Speicherplatz (31) und von dort gegebenenfalls weiter über die verbleibenden Speicherplätze (31' bis 31ʺʺ) in Richtung des letzten Speicherplatzes (31ʺʺ) am Ende der Transporteinrichtung (50) im Arbeitstakt der erfindungsgemässen Vorrichtung (10) bewegt. Im vorliegenden Beispiel ist der dem Abgabeplatz (32) direkt vorausgehende Speicherplatz (31ʺʺ) noch belegbar. Bei dem Manipulator (40) handelt es sich beispielsweise um ein Portalsystem (41), welches in Transportrichtung und gegen die Transportrichtung verfahren werden kann, sodass der Übergabeplatz (22), die Speicherplätze (31 bis 31ʺʺ) sowie der Abgabeplatz (32) durch das Portalsystem (41) anfahrbar sind. Das Portalsystem (41) ist zudem höhenverfahrbar und umfasst einen Greifer, so dass die Lagen aus Stückgütern (90) der Stückgutstapel (91) von oben nach unten einzeln abgenommen und auf den Abgabeplatz (32) umgesetzt werden können. Selbstverständlich ist es auch möglich, dass der Greifer mehrere Stückgüter (90), beispielsweise drei Stückgüter, auf einmal aufnimmt und als Stapel (91) bestehend aus drei Stückgütern (90) auf den Abgabeplatz (32) umsetzt. Das Umsetzen der Stückgüter (90) oder Teilen von Stückgutstapeln (91) ist in Figur 1 schematisch durch die rote Schattierung und den roten Pfeil angedeutet. Das Durchlaufen des Behandlungsabschnitts (20) durch die Stückgutstapel (91) sowie die Belegung der Speicherplätze im Pufferabschnitt (30) erfolgt stets im Arbeitstakt der Transporteinrichtung (50) der erfindungsgemässen Vorrichtung (10), wobei die Vereinzelung der zwischengespeicherten Stückgutstapel (91) mit einer variablen Geschwindigkeit erfolgt, wodurch der am Übergabeplatz (22) ankommenden Fluss von Stückgütern (90) von dem nachgeordneten Abschnitt (70) der Anlage (100) entkoppelbar ist.

In Figur 2 ist eine Ausführungsform des erfindungsgemässen Verfahrens schematisch in Form eines Flussdiagrammes dargestellt. Gezeigt ist eine Anlage (100) zur Herstellung von Lebensmittelprodukten. Im vorliegenden Beispiel handelt es sich bei den Lebensmittelprodukten um Schokoladenprodukte, welche in Produktträgern (92) hergestellt bzw. angeordnet sind und in dem der Vorrichtung (10) vorgeordneten Abschnitt (60), insbesondere einem Palettierer (62), der Anlage (100) aufgestapelt werden. In Figur 2 sind die Produktträger (92) bzw. die Stapel aus Produktträgern (93) nicht gezeigt, sondern der Produktionsfluss durch Pfeile angedeutet. Beispielsweise beträgt der Arbeitstakt des vorgeordneten Abschnitts (60) im Normalbetrieb der Anlage (100) fünfzehn Produktträger (92) pro Minute, welche in Form von Stapeln (93) umfassend jeweils dreissig Produktträger (92) von einer einlaufseitigen Transporteinrichtung (61) auf dem einlaufseitig zuerst angeordneten Behandlungsplatz (21) der erfindungsgemässen Vorrichtung (10) bereitgestellt werden. In Figur 2 ist lediglich ein Behandlungsplatz gezeigt, wobei die Vorrichtung (10) selbstverständlich mehrere Behandlungsplätze (21') aufweisen kann, über welche die Stapel (93) im Arbeitstakt der erfindungsgemässen Vorrichtung (10) in Richtung des Übergabeplatzes (22) bewegt werden. Im vorliegenden Beispiel sind die Transporteinrichtungen (50, 61) der erfindungsgemässen Vorrichtung (10) sowie des ihr vorgeordneten Abschnitts (60) gleich getaktet, d.h. Stapel (93) durchlaufen die Vorrichtung (10) mit im Wesentlichen der Geschwindigkeit, mit der die Stapel (93) bei der Vorrichtung (10) ankommen. Bei dem Übergabeplatz (22) handelt es sich um den in Transportrichtung zuletzt angeordneten Behandlungsplatz, an den sich die Speicherplätze (31, 31') anschliessen. Im Normalbetrieb der Anlage (A), werden die am Übergabeplatz (22) bereitgestellten Stapel (93) durch den Manipulator (40) auf den Abgabeplatz (32) umgesetzt. Dabei kann das Umsetzen der Produktträger (92) eines Stapels (93) durch den Manipulator (40) einzeln oder gruppiert erfolgen. In letztem Fall werden durch den Manipulator (40) beispielsweise drei Produktträger (92) auf einmal von dem auf dem Übergabeplatz (22) angeordneten Stapel (93) abgenommen und als Stapel aus drei Produktträgern auf den Abgabeplatz (32) abgelegt. Im Normalbetrieb beträgt die Arbeitsgeschwindigkeit des Manipulators (40) dabei 100% bezogen auf den Produktausstoss des vorgeordneten Abschnitts (60) der Anlage (100). Anders ausgedrückt ist die Geschwindigkeit, mit der die in die Vorrichtung (10) einlaufenden und am Übergabeplatz (22) bereitgestellten Stückgüter (90) durch den Manipulator (40) abgebaut und über den Abgabeplatz (32) dem nachgeordneten Abschnitt (70) zugeführt werden, so, dass ein neuer Stückgutstapel (91) auf dem Übergabeplatz (22) im Wesentlichen bereitgestellt wird, sobald der vorhergehende Stapel (91) vollständig abgebaut und der Übergabeplatz (22) geleert wurde. Vom Abgabeplatz (32) werden die Produktträger (92) dem nachgeordneten Teil (70) der Anlage (100), beispielsweise einer Ausformeinrichtung (72), über eine Transporteinrichtung (71) des nachgeordneten Abschnitts (70) zugeführt. Nach einer bevorzugten Ausführungsform ist eine Steuereinheit (80) vorgesehen, welche den Manipulator (40) und die Transporteinrichtung (50) der erfindungsgemässen Vorrichtung (10) steuert. Über schematisch dargestellte Sensoren (82) und/oder Überwachungseinrichtungen (83) kann der Betriebszustand des nachgeordneten Abschnitts (70) der Anlage (100) und/oder der Belegungszustand der Speicherplätze (31, 31') überwacht werden. Entsprechend kann im Falle eines unvorhergesehenen Ausfalls und/oder einer geringeren Durchsatzleistung des nachgeordneten Abschnitts (70) der Anlage (100) die Arbeitsgeschwindigkeit des Manipulators (40) angepasst werden. Für das Zwischenspeichern (B) der nach wie vor im Arbeitstakt der Transporteinrichtungen (50, 61) bereitgestellten Stapel (93) wird die Arbeitsgeschwindigkeit des Manipulators auf 0% bezogen auf die Produktionsrate des vorgeordneten Abschnitts (60) der Anlage (100) reduziert und die Stapel (93) vom Übergabeplatz (22) zum in Transportrichtung nächstgelegenen Speicherplatz (31) der Vorrichtung (10) bewegt. Der Transport der Stapel (93) geschieht, wie in Figur 2 schematisch dargestellt, bevorzugt mittels einer Inline-Transporteinrichtung. Solange der nachgeordnete Abschnitt (70) der Anlage (100) eine geringere Leistung als 100% bezogen auf die Produktionsrate des vorgeordneten Abschnitts (60) der Anlage (100) aufweist, werden am Übergabeplatz (22) bereitgestellte Stapel (93) sukzessive im Arbeitstakt auf die Speicherplätze (31, 31') der Vorrichtung (10) bewegt. Sobald der Ausfall behoben und/oder der nachgeordnete Abschnitt (70) der Anlage (100) erneut betriebsbereit ist, werden die zwischenzeitlich belegten Speicherplätzte (31, 31') durch den Manipulator (40) geleert, indem dieser die darauf angeordneten Stapel (93) auf den Abgabeplatz (32) umsetzt, von wo aus sie dem nachgeordneten Abschnitt (70) der Anlage (100) über eine entsprechende Transporteinrichtung (71) zugeführt werden. Beispielsweise ist der nachgeordnete Abschnitt (70) der Anlage (100) in der Lage, achtzehn Produktträger (92) pro Minute abzunehmen, was 120% der Produktionsrate des vorgeordneten Abschnitts (60) der Anlage (100) entspricht. Bei gleichbleibender Anzahl von Stückgütern (90) in den Stückgutstapeln (91) können durch eine entsprechend hohe Arbeitsgeschwindigkeit des Manipulators (40) die Speicherplätze (31, 31') der erfindungsgemässen Vorrichtung (10) schneller entleert werden, als neue Stapel (93) am Übergabeplatz (22) bereitgestellt werden. Auf diese Weise kann die Vorrichtung (10) die Stapel (93) bedarfsweise zwischenspeichern und zeitversetzt an den nachgeordneten Abschnitt (70) der Anlage (100) abgeben, ohne dass die Produktion im vorgeordneten Abschnitt (60) der Anlage (100) unterbrochen werden muss.

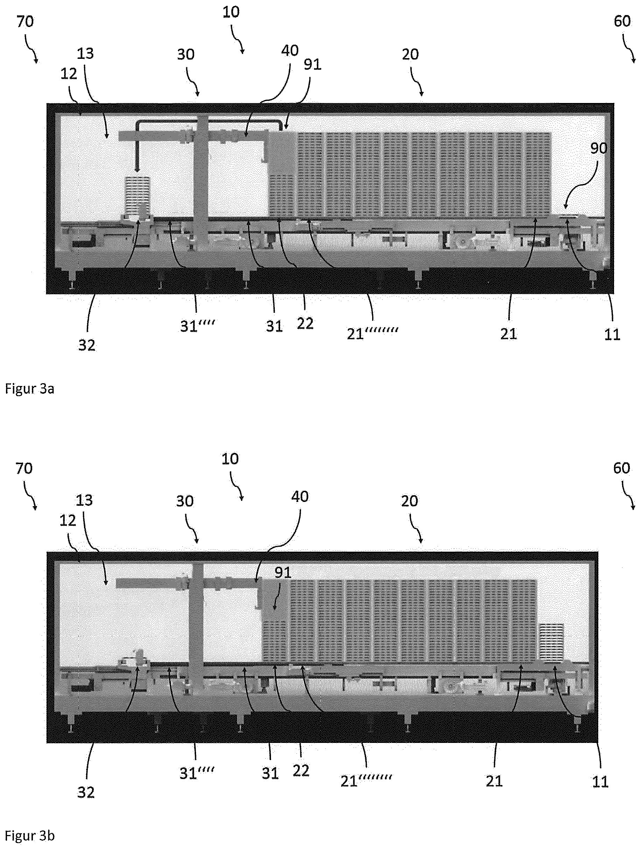

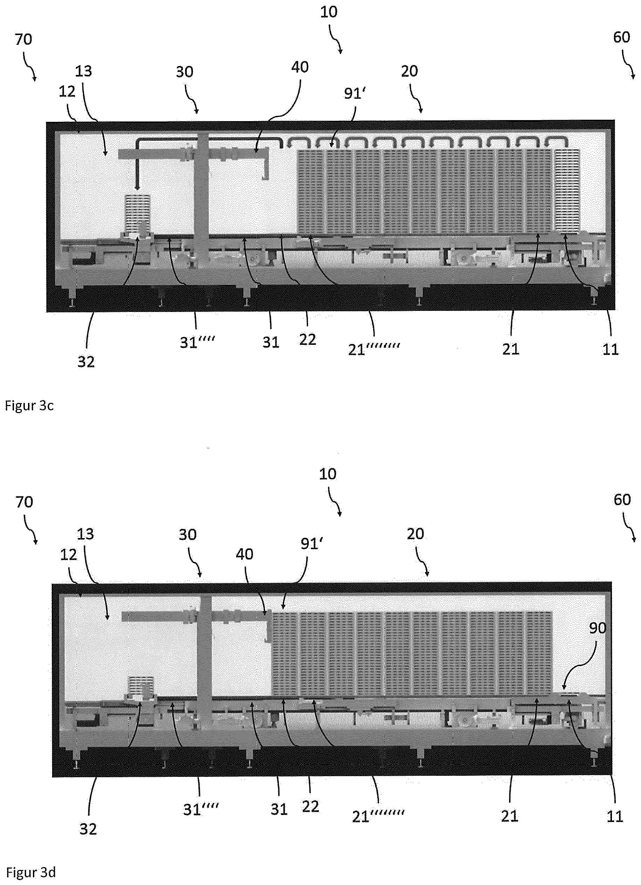

In Figur 3 ist der Ablauf eines erfindungsgemässen Verfahrens mit einer erfindungsgemässen Vorrichtung im Detail dargestellt. Figur 3a veranschaulicht einen Zustand wie er im Normalbetrieb der Anlage (100) vorliegen kann, d.h. wenn der nachgeordnete Anlagenabschnitt (70) der Anlage (100) Stückgüter (90) abnimmt. Ein am Übergabeplatz (22) des Behandlungsabschnitts (20) der Vorrichtung (10) bereitgestellter Stückgutstapel (91) wird durch den Manipulator (40) abgebaut, indem der Manipulator mehrere Stückgüter (90) des Stapels (91) auf einmal auf den Abgabeplatz (32) umsetzt. In Figur 3b ist dargestellt, dass auf dem Abgabeplatz (32) der darauf abgelegte Stückgutstapel entstapelt wird und die vereinzelten Stückgüter dem nachgeordneten Abschnitt (70) der Anlage (100) zugeführt werden. Währenddessen wird der von dem vorgeordneten Abschnitt (60) der Anlage (100) ankommende Stückgüterfluss durch eine einlaufseitig angeordnete Einrichtung zum Aufstapeln aufgestapelt. Sobald der Übergabeplatz (22) durch den Manipulator (40) vollständig geleert wurde und eine vorgegebene Anzahl von Stückgütern (90) durch den Aufstapler (11) aufgestapelt wurde, werden die sich in der Vorrichtung (10) befindenden Stückgutstapel (91) durch die Transporteinrichtung (50) jeweils um einen Platz in Transportrichtung weiterbewegt, wie in Figur 3c schematisch durch Pfeile dargestellt. Der in Figur 3d gezeigte Zustand entspricht im Wesentlichen dem Zustand aus Figur 3a, mit dem Unterschied, dass durch den Manipulator (40) noch keine Stückgüter (90) vom neu auf dem Übergabeplatz (22) bereitgestellten Stapel (91') auf den Abgabeplatz (22) umgesetzt wurden. Die Figuren 3a bis 3d beschreiben also im Wesentlichen einen Arbeitstakt der erfindungsgemässen Vorrichtung (10), an den sich die zu Figur 3a beschriebenen Vorgänge von neuem anschliessen.

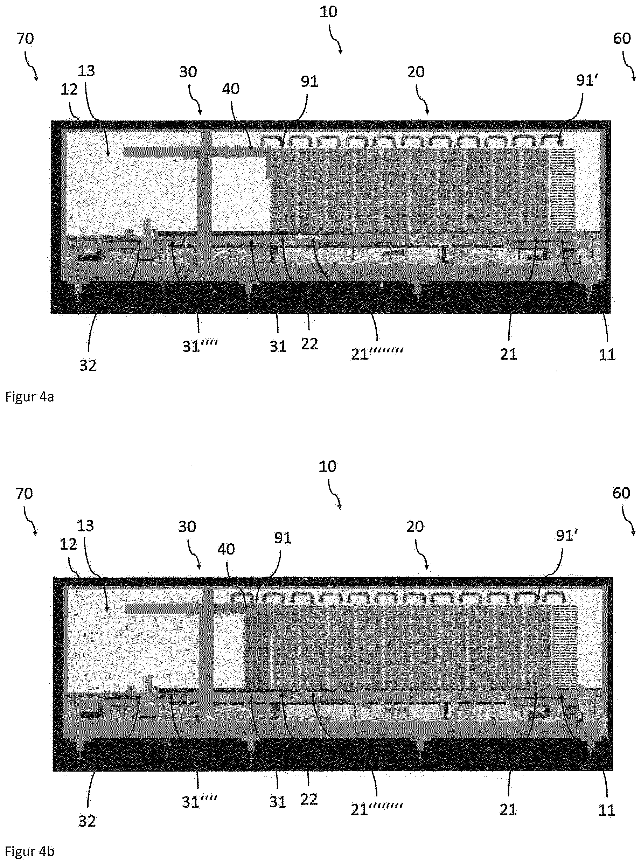

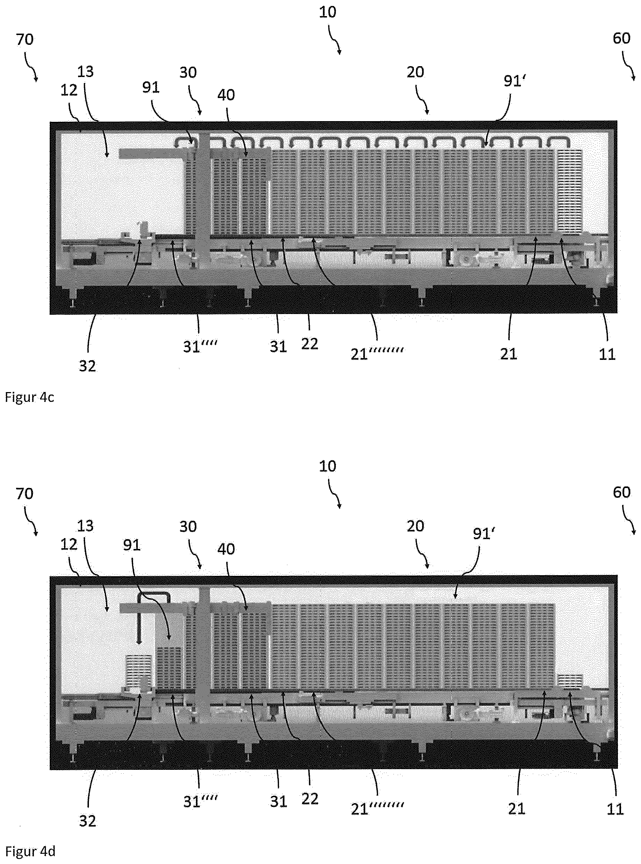

In Figur 4 ist der Ablauf eines weiteren erfindungsgemässen Verfahrens mit einer erfindungsgemässen Vorrichtung im Detail dargestellt. Figur 4a veranschaulicht einen Zustand wie er bei einem Ausfall und/oder einer Betriebsunterbrechung in einem nachgeordneten Abschnitt der Anlage (100) vorliegen kann, d.h. wenn der nachgeordnete Anlagenabschnitt (70) der Anlage (100) keine Stückgüter (90) abnimmt. Sobald eine vorgegebene Anzahl an Stückgütern (90), welche von dem vorgeordneten Abschnitt (60) der Anlage (100) an der Vorrichtung (10) ankommen, durch den Aufstapler (11) zu einem Stückgutstapel (91') aufgestapelt wurden, werden die sich in der Vorrichtung (10) befindenden Stückgutstapel durch die Transporteinrichtung (50) jeweils um einen Platz in Transportrichtung weiterbewegt, wie in Figur 4a schematisch durch Pfeile dargestellt. Da der nachgeordnete Abschnitt (70) der Anlage (100) keine Stückgüter vom Abgabeplatz (32) abnimmt, wird der auf dem Übergabeplatz (22) bereitgestellte Stückgutstapel (91) nicht vom Manipulator (40) auf den Abgabeplatz (32) umgesetzt, sondern durch die Transporteinrichtung (50) auf den in Transportrichtung nächstgelegenen Speicherplatz (31) des Pufferabschnitts (30) bewegt. In der Folge werden einlaufseitig an der Vorrichtung (10) eintreffende Stückgüter (90) weiterhin durch den Aufstapler (11) aufgestapelt. In den in den Figuren 4b und 4c dargestellten Zuständen dauert der Ausfall und/oder die Betriebsunterbrechung noch immer an, sodass noch immer keine Stückgüter (90) vom nachgeordneten Abschnitt (70) der Anlage (100) abgenommen werden. Analog zum in Figur 4a beschriebenen Zustand werden die sich in der Vorrichtung (10) befindenden Stückgutstapel (91) durch die Transporteinrichtung (50) jeweils von ihrer entsprechenden Position um einen Platz in Transportrichtung weiterbewegt. In Figur 4d stellten einen Zustand dar, wie er sich nach der Wiederaufnahme des Betriebs in dem nachgeordneten Abschnitt (70) der Anlage (100) darstellen kann. Wie in Figur 4d dargestellt, wurden in der Zeit vom Eintreten des Ausfalls und/oder der Betriebsunterbrechung im nachgeordneten Abschnitt (70) der Anlage (100) bis zur Wiederaufnahme des Betriebs alle Speicherplätze (31 bis 31ʺʺ) des Pufferabschnitts (30) sukzessive mit Stückgutstapeln belegt. Ein Teil des sich auf dem letzten Speicherplatz (31ʺʺ), welcher dem Abgabeplatz (32) in Transportrichtung vorausgeht, befindenden Stückgutstapels (91) wurde bereits durch den Manipulator (40) auf den Abgabeplatz (32) umgesetzt, von wo aus die Stückgüter (90) vereinzelt und dem nachgeordneten Abschnitt (70) der Anlage zugeführt werden.

Selbstverständlich ist es erfindungsgemäss, wenn im Zuge des Ausfalls und/oder der Betriebsunterbrechung in einem nachgeordneten Abschnitt der Anlage nicht alle im Pufferabschnitt der erfindungsgemässen Vorrichtung vorhandene Speicherplätze mit Stückgutstapeln belegt werden. In diesem Fall sind die Stückgutstapel bei Wiederaufnahme des Betriebs im nachgeordneten Abschnitt der Anlage durch den Manipulator von dem jeweiligen Speicherplatz, bis zu dem sie bewegt wurden, auf den Abgabeplatz umsetzbar.

## Patentansprüche

1. Vorrichtung (10) zum Zwischenspeichern von Stückgutstapeln (91), die getaktet auf einem in der Vorrichtung (10) integrierten Übergabeplatz (22) einer Anlage (100) zum Herstellen von Lebensmittelprodukten, insbesondere Schokoladenprodukten, bereitgestellt werden, wobei die Vorrichtung (10) aufweist:
- einen Pufferabschnitt (30) umfassend einen oder mehrere Speicherplätze (31) sowie einen Abgabeplatz (32) ;
- eine Transporteinrichtung (50) zum Bewegen der Stückgutstapel (91); und
- einen Manipulator (40), durch den der Übergabeplatz (22), der Abgabeplatz (32) sowie die dazwischen angeordneten Speicherplätze (31) anfahrbar sind;
wobei durch den Manipulator (40) jeweils wenigstens ein Stückgut (90) eines Stückgutstapels (91), bevorzugt mehrere Stückgüter (90) eines Stückgutstapels (91) auf einmal, auf den Abgabeplatz (32) umsetzbar ist; wobei auf dem Abgabeplatz (32) die Stückgutstapel (91) vereinzelbar und einem nachgeordneten Abschnitt (70) der Anlage (100) zuführbar sind; und wobei der am Übergabeplatz (22) bereitgestellte Fluss von Stückgutstapeln (91) durch die sukzessive Belegung der Speicherplätze (31) von dem nachgeordneten Abschnitt (70) der Anlage (100) entkoppelbar ist,
**dadurch gekennzeichnet, dass** die Vorrichtung (10) ferner einen Behandlungsabschnitt (20) umfassend mehrere Behandlungsplätze (21) aufweist, wobei der Übergabeplatz (21) in Transportrichtung auf die Behandlungsplätze (21) folgt und wobei die Stückgutstapel (91) auf den Behandlungsplätzen (21) aktiv behandelbar sind,
wobei die Transporteinrichtung (50) als Hubbalkenförderer (51) ausgebildet ist, wobei der Förderer zwei parallel zueinander angeordnete Schubleisten (52) mit Mitnehmern (53), einen elektrischen Linearantrieb (54) zur Bewegung der Schubleisten (52) in einer Transportrichtung und mindestens einen Pneumatikantrieb (55) für eine Vertikalbewegung der Schubleisten umfasst,
wobei die Vorrichtung (10) ferner eine Verkleidung (12) umfasst, die einen bezüglich Luftfeuchtigkeit und/oder Temperatur kontrollierten Raum (13) umschliesst und/oder vor anderen Umwelteinflüssen geschützten Raum (13) umschliesst, wobei der Pufferabschnitt (30) und der Behandlungsabschnitt (20) in dem Raum (13) enthalten sind.

2. Vorrichtung gemäss Anspruch 1, **dadurch gekennzeichnet, dass** die Stückgutstapel (91) auf dem Übergabeplatz (22) aktiv behandelbar sind.

3. Vorrichtung gemäss Anspruch 2, **dadurch gekennzeichnet, dass** im Pufferabschnitt (30) keine aktive Behandlung von auf den Speicherplätzen (31) und dem Abgabeplatz (32) angeordneten Stückgutstapeln (91) erfolgt.

4. Vorrichtung gemäss einem der vorhergehenden Ansprüche, **dadurch gekennzeichnet, dass** es sich bei dem Manipulator (40) um ein Portalsystem (41) handelt.

5. Vorrichtung gemäss einem der vorhergehenden Ansprüche, **dadurch gekennzeichnet, dass** die Transporteinrichtung (50) als Inline-Transporteinrichtung einer Anlage (100) ausgebildet ist, welche zwischen einem vorgeordneten Abschnitt (60) und einem in Transportrichtung nachgeordneten Abschnitt (70) der Anlage (100) zwischenschaltbar ist.

6. Vorrichtung gemäss einem der vorhergehenden Ansprüche, **dadurch gekennzeichnet, dass** die Vorrichtung (10) mindestens eine Steuereinheit (80) aufweist, die Schnittstellen (81) zum Datentransfer mit Steuereinheiten vor- und/oder nachgeordneter Abschnitte (60, 70) der Anlage (100) umfasst, sodass die Steuereinheiten (80) der vor- und/oder nachgeordneten Abschnitte (60, 70) der Anlage (100) in einer Ring- oder Reihenschaltung verbindbar oder verbunden sind.

7. Vorrichtung gemäss Anspruch 6, **dadurch gekennzeichnet, dass** die Steuereinheit (80) zur Steuerung des Manipulators (40) sowie der Transporteinrichtung (50) ausgebildet ist, wobei die Steuereinheit (80) mit zumindest einem an einem der vor- und/oder nachgeordneten Abschnitte (60, 70) der Anlage (100) angeordneten Sensor (82) verbunden ist, wobei der Sensor (82) den Betriebszustand des jeweiligen Abschnitts erfasst, sodass die Aktivität des Manipulators (40) sowie der Transporteinrichtung (50) in Abhängigkeit des jeweiligen Betriebszustandes des vor- und/oder nachgeordneten Abschnitts (60, 70) über die Steuereinheit (80) steuerbar ist.

8. Anlage zum Herstellen von Lebensmittelprodukten, insbesondere Schokoladenprodukten, mit einer Vorrichtung gemäss einem der Ansprüche 1 bis 7.

9. Verfahren , zum Zwischenspeichern von Stückgutstapeln (91), in einer Anlage (100) zum Herstellen von Lebensmittelprodukten, insbesondere Schokoladenprodukten umfassend eine Vorrichtung (10) nach einem der Ansprüche 1 bis 7 , wobei die Stückgutstapel (91) getaktet auf einem in der Vorrichtung (10) integrierten Übergabeplatz (22) der Anlage (100) bereitgestellt werden, zuvor in Transportrichtung einen oder mehrere Behandlungsplätze (21) bis dem Übergabeplatz (22) durchlaufen, und wobei ein Manipulator (40) jeweils wenigstens ein Stückgut (90) eines Stückgutstapels (91), bevorzugt mehrere Stückgüter (90) eines Stückgutstapels (91) auf einmal, entweder vom Übergabeplatz (22) oder von einem Speicherplatz (31) auf den Abgabeplatz (32) umsetzt, sofern die Stückgüter (90) von einem nachgeordneten Abschnitt (70) der Anlage (100) abnehmbar sind.

10. Verfahren gemäss Anspruch 9, **dadurch gekennzeichnet, dass** bei einem Betriebsunterbruch in einem der Vorrichtung (10) nachgeordneten Abschnitt (70) der Anlage (100) die am Übergabeplatz (22) ankommenden Stückgutstapel (91) durch die Transporteinrichtung (50) auf den vom Übergabeplatz (22) in Transportrichtung nächstgelegenen Speicherplatz (31) bewegt werden und die bereits zwischengespeicherten Stückgutstapel (91) von ihrem jeweiligen Speicherplatz (31) auf den in Transportrichtung nächstgelegenen Speicherplatz (31') bewegt werden, wobei bei Wiederaufnahme des Betriebs durch den der Vorrichtung (10) nachgeordneten Abschnitt (70) der Anlage (100) die auf den Speicherplätzen (31, 31') zwischengespeicherten Stückgutstapel (91) durch den Manipulator (40), bevorzugt im Wesentlichen nach dem first in-first out-Prinzip, auf den Abgabeplatz (32) umgesetzt werden.

11. Verfahren gemäss Anspruch 9 oder 10, **dadurch gekennzeichnet, dass** die Flussrate von an den nachgeordneten Abschnitt (70) der Anlage (100) abgegebenen Stückgütern (90) zwischen 0 und 120% bezogen auf die je Maschinentakt der Transporteinrichtung (50) am Übergabeplatz (22) ankommende Stückgüterzahl beträgt.

12. Verfahren gemäss einem der Ansprüche 9 bis 11, **dadurch gekennzeichnet, dass** eine Steuereinheit (80) und zumindest ein mit der Steuereinheit (80) verbundener und an einem der nachgeordneten Abschnitte (70) der Anlage (100) angeordneter Sensor (82) vorgesehen sind, wobei die Steuereinheit (80) Schnittstellen (81) zum Datentransfer mit Steuereinheiten (80') vor- und/oder nachgeordneter Abschnitte (60, 70) der Anlage (100) umfasst und mit den Steuereinheiten (80') der vor- und/oder nachgeordneten Abschnitte (60, 70) der Anlage (100) in einer Ring- oder Reihenschaltung verbunden ist, wobei der Sensor (82) den Betriebszustand des nachgeordneten Abschnitts (70) der Anlage (100) bestimmt, und wobei die Aktivität des Manipulators (40) sowie der Transporteinrichtung (50) in Abhängigkeit des Betriebszustandes des nachgeordneten Abschnitts (70) über die Steuereinheit (80) gesteuert und/oder geregelt werden.

13. Verfahren gemäss Anspruch 12, **dadurch gekennzeichnet, dass** ferner eine Einrichtung (83) zur automatisierten Erfassung des Belegungszustandes der Speicherplätze (31) vorgesehen ist, wobei bei einer vollständigen Belegung aller in der Vorrichtung (10) vorhandenen Speicherplätze (31) die Produktion in wenigstens einem der vorgeordneten Abschnitte (60) der Anlage (100) angehalten wird und wobei vor der Wiederaufnahme der Produktion zumindest der dem Abgabeplatz (32) direkt vorhergehende Speicherplatz (31) durch den Manipulator (40) geleert wird.

## Claims

1. Device (10) for the intermediate storage of stacks (91) of piece goods, which are provided in a clocked manner on a transfer station (22), integrated in the device (10), of a plant (100) for the production of food products, in particular chocolate products, the device (10) having
- a buffer section (30) comprising one or more storage locations (31) and a delivery location (32);
- a transport device (50) for moving the stacks (91); and
- a manipulator (40), by means of which the transfer location (22), the delivery location (32) and the storage locations (31) arranged therebetween can be approached;
wherein at least one unit load (90) of a stack (91), preferably several unit loads (90) of a stack (91) at a time, can be transferred to the delivery location (32) by the manipulator (40); wherein the stacks (91) of piece goods can be separated at the delivery location (32) and fed to a downstream section (70) of the plant (100); and wherein the flow of stacks (91) of piece goods provided at the transfer location (22) can be decoupled from the downstream section (70) of the plant (100) by the successive occupation of the storage locations (31), **characterized in that** the device (10) further has a treatment section (20) comprising one or more treatment locations (21), wherein the transfer location (21) follows the treatment locations (21) in the transport direction and wherein the stacks (91) of piece goods can be actively treated at the treatment locations (21),
wherein the transport device (50) is designed as a walking beam conveyor (51), wherein the conveyor comprises two push bars (52) arranged parallel to each other with carriers (53), an electric linear drive (54) for moving the push bars (52) in a transport direction and at least one pneumatic drive (55) for a vertical movement of the push bars,
wherein the device (10) further comprises a casing (12) enclosing a space (13) controlled with respect to humidity and/or temperature and/or protected from other environmental influences, wherein the buffer section (30) and the treatment section (20) are contained in the space (13).

2. Device according to claim 1, **characterized in that** the stacks (91) can be actively treated on the transfer location (22).

3. Device according to claim 2, **characterized in that** in the buffer section (30) there is no active treatment of stacks (91) arranged on the storage locations (31) and the delivery location (32).

4. Device according to one of the preceding claims, **characterized in that** the manipulator (40) is a gantry system (41).

5. Device according to one of the preceding claims, **characterized in that** the transport device (50) is designed as an inline transport device of a plant (100), which can be interposed between an upstream section (60) and a downstream section (70) of the plant (100) in the transport direction.

6. Device according to one of the preceding claims, **characterized in that** the device (10) has at least one control unit (80) which comprises interfaces (81) for data transfer with control units of upstream and/or downstream sections (60, 70) of the plant (100), so that the control units (80) of the upstream and/or downstream sections (60, 70) of the plant (100) can be connected or are connected in a ring or series connection.

7. Device according to claim 6, **characterized in that** the control unit (80) is designed to control the manipulator (40) and the transport device (50), the control unit (80) being connected to at least one sensor (82) arranged on one of the upstream and/or downstream sections (60, 70) of the plant (100), wherein the sensor (82) detects the operating state of the respective section, so that the activity of the manipulator (40) and of the transport device (50) can be controlled via the control unit (80) as a function of the respective operating state of the upstream and/or downstream section (60, 70) .

8. Plant for producing food products, in particular chocolate products, with a device according to one of claims 1 to 7.

9. Method , for temporarily storing stacks (91) of piece goods, in a plant (100) for producing food products, in particular chocolate products, comprising a device (10) according to one of claims 1 to 7, wherein the stacks (91) of piece goods are provided in a clocked manner on a transfer location (22) of the plant (100) integrated in the device (10), previously passing through one or more treatment locations (21) up to the transfer location (22) in the transport direction, and wherein a manipulator (40) in each case transfers at least one unit load (90) of a stack (91), preferably several unit loads (90) of a stack (91) at once, either from the transfer location (22) or from a storage location (31) to the delivery location (32), provided that the unit loads (90) can be removed from a downstream section (70) of the plant (100).

10. Method according to claim 9, **characterized in that**, when operation is interrupted in a section (70) of the plant (100) downstream of the device (10), the stacks (91) of piece goods arriving at the transfer location (22) are moved by the transport device (50) to the storage location (31) closest to the transfer location (22) in the transport direction and the stacks (91) of piece goods which have already been temporarily stored are moved from their respective storage location (31) to the storage location (31') closest in the transport direction, wherein, when operation is resumed by the section (70) of the plant (100) downstream of the device (10), the stacks (91) temporarily stored in the storage locations (31, 31') are transferred to the delivery location (32) by the manipulator (40), preferably essentially according to the first in-first out principle.

11. Method according to claim 9 or 10, **characterized in that** the flow rate of unit loads (90) delivered to the downstream section (70) of the plant (100) is between 0 and 120% in relation to the number of unit loads arriving at the transfer location (22) per machine cycle of the transport device (50).

12. Method according to one of claims 9 to 11, **characterized in that** a control unit (80) and at least one sensor (82) connected to the control unit (80) and arranged on one of the downstream sections (70) of the plant (100) are provided, wherein the control unit (80) comprises interfaces (81) for data transfer with control units (80') of upstream and/or downstream sections (60, 70) of the plant (100) and is connected to the control units (80') of the upstream and/or downstream sections (60, 70) of the plant (100) in a ring or series connection, wherein the sensor (82) determines the operating state of the downstream section (70) of the plant (100), and wherein the activity of the manipulator (40) and of the transport device (50) is controlled and/or regulated via the control unit (80) as a function of the operating state of the downstream section (70).

13. Method according to claim 12, **characterized in that** a device (83) for automatically detecting the occupancy state of the storage locations (31) is also provided, wherein, when all the storage locations (31) present in the device (10) are fully occupied, production in at least one of the upstream sections (60) of the plant (100) is stopped and wherein, before production is resumed, at least the storage location (31) directly preceding the delivery location (32) is emptied by the manipulator (40).

## Revendications

1. Dispositif (10) pour le stockage intermédiaire de piles de marchandises de détail (91), qui sont mises à disposition de manière cadencée sur un emplacement de transfert (22) intégré dans le dispositif (10) d'une installation (100) pour la fabrication de produits alimentaires, en particulier de produits en chocolat, le dispositif (10) présentant :
- une section tampon (30) comprenant un ou plusieurs emplacements de stockage (31) ainsi qu'un emplacement de distribution (32) ;
- un dispositif de transport (50) pour déplacer les piles de produits de détail (91) ; et
- un manipulateur (40), par lequel l'emplacement de transfert (22), l'emplacement de distribution (32) ainsi que les emplacements de stockage (31) disposés entre eux peuvent être approchés ;
le manipulateur (40) permettant de transférer à chaque fois au moins un produit de détail (90) d'une pile de produits de détail (91), de préférence plusieurs produits de détail (90) d'une pile de produits de détail (91) à la fois, sur l'emplacement de distribution (32) ; les piles d'articles (91) pouvant être séparées à l'emplacement de distribution (32) et amenées à une section (70) en aval de l'installation (100) ; et le flux de piles d'articles (91) mis à disposition à l'emplacement de transfert (22) pouvant être découplé de la section (70) en aval de l'installation (100) par l'occupation successive des emplacements de stockage (31),
**caractérisé en ce que** le dispositif (10) présente en outre une section de traitement (20) comprenant un ou plusieurs emplacements de traitement (21), l'emplacement de transfert (21) suivant les emplacements de traitement (21) dans le sens du transport et les piles de produits de détail (91) pouvant être traitées activement sur les emplacements de traitement (21),
le dispositif de transport (50) étant conçu comme un convoyeur à barres de levage (51), le convoyeur comprenant deux barres de poussée (52) disposées parallèlement l'une à l'autre avec des entraîneurs (53), un entraînement linéaire électrique (54) pour déplacer les barres de poussée (52) dans une direction de transport et au moins un entraînement pneumatique (55) pour un mouvement vertical des barres de poussée,
le dispositif (10) comprend en outre un habillage (12) qui entoure un espace (13) contrôlé en termes d'humidité et/ou de température et/ou qui entoure un espace (13) protégé d'autres influences environnementales, la section tampon (30) et la section de traitement (20) étant contenues dans l'espace (13) .

2. Dispositif selon la revendication 1, **caractérisé en ce que** les piles de produits de détail (91) peuvent être traitées activement sur l'emplacement de transfert (22).

3. Dispositif selon la revendication 2, **caractérisé en ce que** dans la section tampon (30), il n'y a pas de traitement actif des piles de colis (91) disposées sur les emplacements de stockage (31) et l'emplacement de distribution (32).

4. Dispositif selon l'une quelconque des revendications précédentes, **caractérisé en ce que** le manipulateur (40) est un système à portique (41).

5. Dispositif selon l'une des revendications précédentes, **caractérisé en ce que** le dispositif de transport (50) est conçu comme un dispositif de transport en ligne d'une installation (100), qui peut être intercalé entre une section amont (60) et une section aval (70) de l'installation (100) dans le sens du transport.

6. Dispositif selon l'une des revendications précédentes, **caractérisé en ce que** le dispositif (10) présente au moins une unité de commande (80) qui comprend des interfaces (81) pour le transfert de données avec des unités de commande de sections (60, 70) de l'installation (100) situées en amont et/ou en aval, de sorte que les unités de commande (80) des sections (60, 70) de l'installation (100) situées en amont et/ou en aval peuvent être reliées ou sont reliées dans un montage en anneau ou en série.

7. Dispositif selon la revendication 6, **caractérisé en ce que** l'unité de commande (80) est conçue pour commander le manipulateur (40) ainsi que le dispositif de transport (50), l'unité de commande (80) étant reliée à au moins un capteur (82) disposé sur l'une des sections (60, 70) de l'installation (100) situées en amont et/ou en aval, le capteur (82) détectant l'état de fonctionnement de la section respective, de sorte que l'activité du manipulateur (40) ainsi que du dispositif de transport (50) peut être commandée par l'intermédiaire de l'unité de commande (80) en fonction de l'état de fonctionnement respectif de la section (60, 70) située en amont et/ou en aval.

8. Installation de fabrication de produits alimentaires, notamment de produits chocolatés, comprenant un dispositif selon l'une quelconque des revendications 1 à 7.

9. Procédé de stockage intermédiaire de piles de produits de détail (91) dans une installation (100) de fabrication de produits alimentaires, notamment de produits chocolatés, comprenant un dispositif (10) selon l'une des revendications 1 à 7, les piles de produits de détail (91) étant mises à disposition de manière cadencée sur un emplacement de transfert (22) de l'installation (100) intégré au dispositif (10), en passant préalablement par un ou plusieurs emplacements de traitement (21) dans le sens du transport jusqu'à l'emplacement de transfert (22), et un manipulateur (40) transférant à chaque fois au moins un produit de détail (90) d'une pile de produits de détail (91), de préférence plusieurs produits de détail (90) d'une pile de produits de détail (91) à la fois, soit de l'emplacement de transfert (22), soit d'un emplacement de stockage (31) vers l'emplacement de distribution (32), dans la mesure où les produits de détail (90) peuvent être retirés d'une section (70) de l'installation (100) située en aval.

10. Procédé selon la revendication 9, **caractérisé en ce que**, lors d'une interruption de fonctionnement dans une section (70) de l'installation (100) située en aval du dispositif (10), les piles de produits de détail (91) arrivant à l'emplacement de transfert (22) sont déplacées par le dispositif de transport (50) vers l'emplacement de stockage (31) le plus proche de l'emplacement de transfert (22) dans le sens du transport et les piles de produits de détail (91) déjà stockées temporairement sont déplacées de leur emplacement de stockage (31) respectif vers l'emplacement de stockage (31') le plus proche dans le sens du transport, lors de la reprise du fonctionnement par la section (70) de l'installation (100) située en aval du dispositif (10), les piles de produits de détail (91) stockées temporairement sur les emplacements de stockage (31, 31') étant déplacées par le manipulateur (40), de préférence essentiellement selon le principe first in-first out, sur l'emplacement de distribution (32).

11. Procédé selon la revendication 9 ou 10, **caractérisé en ce que** le taux de flux de produits de détail (90) délivrés à la section aval (70) de l'installation (100) est compris entre 0 et 120% par rapport au nombre de produits de détail arrivant à l'emplacement de transfert (22) à chaque cycle de machine du dispositif de transport (50).

12. Procédé selon l'une des revendications 9 à 11, **caractérisé en ce qu'**il est prévu une unité de commande (80) et au moins un capteur (82) relié à l'unité de commande (80) et disposé sur l'une des sections (70) de l'installation (100) situées en aval, l'unité de commande (80) comportant des interfaces (81) pour le transfert de données avec des unités de commande (80') de sections (60, 70) de l'installation (100) et est reliée aux unités de commande (80') des sections (60, 70) de l'installation (100) situées en amont et/ou en aval dans un circuit en anneau ou en série, le capteur (82) déterminant l'état de fonctionnement de la section (70) de l'installation (100) située en aval, et l'activité du manipulateur (40) ainsi que du dispositif de transport (50) étant commandée et/ou réglée en fonction de l'état de fonctionnement de la section (70) située en aval par l'intermédiaire de l'unité de commande (80).

13. Procédé selon la revendication 12, **caractérisé en ce qu'**il est prévu en outre un dispositif (83) de détection automatisée de l'état d'occupation des emplacements de stockage (31), la production étant arrêtée dans au moins l'une des sections (60) en amont de l'installation (100) lorsque tous les emplacements de stockage (31) présents dans le dispositif (10) sont entièrement occupés, et au moins l'emplacement de stockage (31) précédant directement l'emplacement de distribution (32) étant vidé par le manipulateur (40) avant la reprise de la production.
